**Europäisches Patentamt**

**European Patent Office**

**Office européen des brevets**

(19)

(11) Publication number : **0 318 983 B1**

(12) **EUROPEAN PATENT SPECIFICATION**

(45) Date of publication of patent specification :
01.02.95 Bulletin 95/05

(51) Int. Cl.⁶ : **G06F 9/44**

(21) Application number : **88120025.7**

(22) Date of filing : **30.11.88**

(54) **Interrogating device and method.**

(30) Priority : **03.12.87 JP 308000/87**

(43) Date of publication of application :
**07.06.89 Bulletin 89/23**

(45) Publication of the grant of the patent :
**01.02.95 Bulletin 95/05**

(84) Designated Contracting States :
**DE FR GB**

(56) References cited :
**PROCEEDINGS, IEEE COMPUTER SOCIETY
1986 INTERNATIONAL CONFERENCE ON
COMPUTER LANGUAGES, Miami, Florida,
27th-30th October 1986, pages 2-12, IEEE,New
York,US; S. DEBRAY: "Towards banishing the
cut from prolog"
THE SECOND CONFERENCE ON ARTIFICIAL
INTELLIGENCE APPLICATIONS, THE EN-
GINEERING OF KNOWLEDGE-BASED SYS-
TEMS, Miami, Florida, 11th-13th December
1985,pages 473-480, IEEE, New York, US; F.
BRUNDICK et al.: "GENIE: an inference en-
gine with diverse applications"**

(56) References cited :
**PROCEEDINGS OF THE 1987 IEEE INTER-
NATIONAL CONFERENCE ON SYSTEMS,
MAN,AND CYBERNETICS, Alexandria, Vir-
ginia, 20th-23rd October 1987, vol. 3, pages
173-176, IEEE, New York, US; B. SCHOTT et al.:
"Modus ponens, modus tollens,and fuzzy re-
lations in goal directed inference"
ADVANCES IN COMPUTERS, vol. 22, 1983,
pages 164-216, Academic Press, New
York,US; B.G. BUCHANAN et al.: "Principles
of rule-based expert systems"**

(73) Proprietor : **SHARP KABUSHIKI KAISHA
22-22 Nagaike-cho
Abeno-ku
Osaka 545 (JP)**

(72) Inventor : **Tanaka, Toshiyuki
Subaru Haitsu 102, 1433-1
Koizumi-cho
Yamatokoriyama-shi Nara-ken (JP)**
Inventor : **Nakamura, Nobuo
Haitsu Yamatokoriyama 805
33, Yanagi 3-chome
Yamatokoriyama-shi Nara-ken (JP)**
Inventor : **Yamamoto, Mutsuhiro
1-31-203, Higashikidera-cho
Nara-shi Nara-ken (JP)**

(74) Representative : **Glawe, Delfs, Moll & Partner
Patentanwälte
Postfach 26 01 62
D-80058 München (DE)**

EP 0 318 983 B1

## Description

The present invention relates to an interrogating device capable of permitting an efficient inference.

A negation of the rule used in the forward inference system can be attached to a condition and means that "there is no fact in the working memory which matches with the condition memory." A negation of the rule used in the backward inference system can be attached to both a condition and a fact in the working memory and means "⋯ not ⋯". Also, in the backward inference using the accuracy, it may occur that the affirmative/negation may reverse with each other depending on the accuracy. Because of this, in the interrogating device concurrently utilizing the forward inference mechanism and the backward inference mechanism, the negation is differently interpreted.

Accordingly, in the prior art interrogating device, only one of the forward inference mechanism and the backward inference mechanism is employed. Where both of the inference mechanisms are employed, the backward inference cannot handle the condition of a negative expression "not" such as in the sentence "There is no element which matches with the working memory", as hereinabove described, and therefore, it may occur that backward inference cannot be performed if the fact is deleted in the forward inference. Because of this, arrangement has been made that no deletion of the fact is available in he forward inference and. Because a deletion is not performed in the forward inference, a conflict set cannot be formed in the forward inference.

As hereinbefore described, the interrogating device concurrently utilizes the forward inference and the backward inference. Since the negation is interpreted in different ways, arrangement has been made that a fact of negation (⋯ not ⋯) cannot be prepared in a rule conclusion unit used in the forward inference.

Thus, in the interrogating device concurrently utilizing the forward inference mechanism and the backward inference mechanism, since a fact of negation (⋯ not ⋯) is not prepared in the conclusion unit being used in the forward inference, it is not possible to prepare the fact of the negation (⋯ not ⋯) in the conclusion unit of the forward inference and to utilize it in the backward inference. Accordingly, the backward inference has a search that is made according to a tree structure of the rules. In order to obtain a conclusion of the negation, the rules must be searched until the conclusion of the negation is obtained, posing a problem in that the inference cannot be performed efficiently. Also, since a condition of the negation (there is not ⋯) cannot be handled in the conclusion unit of the rules used in the backward inference, there are problems in that the deletion of the fact cannot be accomplished in the forward inference and that, in the case where a fact which matches with the condition placed in the backward inference exists in the working memory, interrogation has to be performed occasionally.

An interrogating device according to the preamble of claim 1 and as it is described above is disclosed in a paper by F. Grundig et al: "Genie: an inference engine with diverse applications" in: the second conference on artificial intelligence applications, the engineering of knowledge-based systems, Miami, Florida, 11th-13th December 1985, pages 473-480.

S. Debray: "Towards banishing the cut from prolog" in proceedings of the IEEE Computer Society 1986, International Conference on Computer Languages, Miami, Florida, 27th to 30th October 1986, pages 2 to 12, iee, New York, US, describes the use of negative goals i.e. negations, in a logic programming language like prolog.

An important object of the present invention is to provide an interrogating device and a method of a type wherein the fact of the negation (⋯ not ⋯) can be formed in the forward inference and, also, the condition of the negation (there is not ⋯) can be handled in the backward inference so that neither search nor interrogation need be performed in the backward inference, thereby permitting the efficient inference to be accomplished.

This object is achieved by a device as claimed in claim 1 and a method as claimed in claim 2, respectively.

The present invention provides an interrogating device which comprises a rule memory for storing forward inference rules that are used in a forward inference control system and backward inference rules that are used in a backward inference control system, a working memory for storing facts, a forward inference control section that adds or deletes a fact relative to the working memory according to the forward inference rules, and a backward inference control section that conducts a search according to a tree structure of search rules. In this device, a command necessary for instructing the preparation of the facts of the negation is added to a conclusion unit of the forward inference rules stored in the rule memory. A condition renders it to be true when a fact corresponding to the working memory fails to be added to a condition unit of the backward inference rules stored in the rule memory. Whereby, the fact of the negation prepared by the forward inference can be used in the backward inference and the backward inference can be accomplished even though the working memory does not contain a corresponding fact.

According to the present invention, the interrogating device is supplied with the forward inference rules that are used in the forward inference control system and the inference rules and facts that are used in the backward inference control system which are subsequently stored in the rule memory. Also, the facts inputted to the interrogating device are stored in the working memory. At this time, depending on the necessity, the command for instructing the preparation of the fact of the negation is added to the conclusion unit of the forward inference rule, and the condition which makes it true, when there is no fact corresponding to the working memory, is added to the condition unit of the backward inference rules. Accordingly, the fact of the negation prepared by the forward inference in the forward inference control section can be used in the backward inference in the backward inference control section, so that it is possible to eliminate an unnecessary search for obtaining a conclusion of the negation in the backward inference. Also, even though there is no corresponding fact in the working memory, the backward inference can be performed without the interrogation taking place.

This and other objects and features of the present invention will become clear from the following description taken in conjunction with a preferred embodiment thereof with reference to the accompanying drawings, in which:

Fig. 1 is a block diagram showing the structure of an interrogating device according to one embodiment of the present invention;

Fig. 2 is a diagram showing the structure of facts stored in a working memory;

Fig. 3 is a diagram showing the structure of forward inference rules stored in a rule storage unit;

Fig. 4 is a diagram showing a storage structure of a condition unit of the forward inference rules;

Fig. 5 is a diagram showing a storage structure of a conclusion unit of the rules;

Fig. 6 is a diagram showing a storage structure of elements of a conflict set;

Fig. 7 is a diagram showing the elements of the conflict set linked together in a chain;

Fig. 8 is a diagram showing the structure of backward inference rules stored in the rule storage unit; and

Fig. 9 is a diagram showing a storage structure of a condition unit of the backward inference rules.

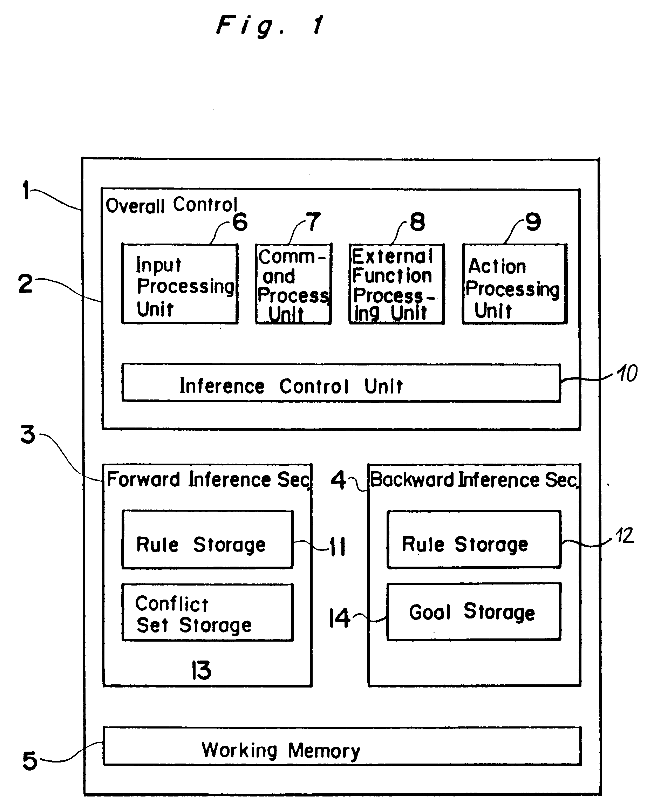

Fig. 1 illustrates a block diagram showing the structure of an interrogating device 1 having both of a forward inference control mechanism and a backward inference control mechanism. The interrogating device 1 comprises an overall control unit 2, a forward inference section 3, a backward inference section 4 and a working memory 5.

The overall control unit 2 starts or terminates an interrogating operation (as will be described later) executes a forward/backward inference control, analyzes an input data, processes a command relative to the interrogating device 1, and processes actions obtained from the inference during the execution.

In other words, an input processing unit 6 reads and analyzes files containing facts and rules separately compiled by a program synthesizing device (not shown) so that the contents of the files can be classified into facts, forward inference rules, backward inference rules and commands relative to the interrogating device 1. Where a result of the classification is facts, the facts are stored in a working memory 5; where a result of the classification is the forward inference rules, the forward inference rules are stored in a rule storage 11 of the forward inference section 3; where a result of the classification is the backward inference rules, the backward inference rules are stored in a rule storage 12 of the backward inference section 4; and where a result of the classification is a command, the command processing unit 7 is called. By so doing, the command processing unit 7 executes, depending on the contents of the command, a process which starts the inference and processes a command issued to the interrogating device 1 from the outside such as the display of the contents of the working memory 5 and the specification of a strategy. By way of example, when a command instructing the start of the inference is inputted, an inference control unit 10 is called for the execution of the inference. An external function processing unit 8 performs a process which is to be executed when an external function is called during the execution of the inference. An action processing unit 9 is operable to perform an action which takes place during the forward inference or the backward inference as will be described later.

The forward inference section 3 performs a comparison between the fact stored in the working memory 5 and the rules stored in the rule storage 11 to synthesize a conflict set consisting of the rule and the corresponding fact which have satisfied a condition, which conflict set is subsequently stored in a conflict set storage 13. Then, by a conflict resolution, one of the rules is selected from the conflict set and the action of a conclusion portion of the selected rule is executed.

The backward inference section 4 is operable to set up a goal according to the rules stored in the rule storage 12 for the backward inference and refers to the working memory 5 for the determination of whether or not the goal has been established.

Where interrogation is performed with the use of the interrogating device 1 of the above described construction, the following procedures are taken.

(1) By a program synthesizing device not shown, a file consisting of the fact and the rule is prepared.

(2) The contents of this file are analyzed by the interrogating device 1 and are stored in a storage device (the rule storages 11 and 12 and the working memory 5 shown in Fig. 1).

(3) With the use of the fact and the rules stored in the storage device 11, 12 and 5, the inference is executed as will be described later. If it does not function properly, the procedure (1) above is resumed.

The present invention relates to the sentence construction that is used to synthesize a knowledge file during the procedure (1), the conversion that is made for the storage in the rule storages 11 and 12 and also in the working memory 5 during the procedure (2) and the inference that is executed during the procedure (3).

(A) Sentence Construction of Knowledge

There is a fact and a rule in the above described knowledge. Hereinafter, the sentence construction of each of the fact and the rule will be discussed. The accuracy in the illustrated embodiment is expressed by an integer value within the range of -100 to 100.

An example of the sentence construction of the fact in the knowledge file is illustrated in Table 1 below.

## Table 1

```
There is a fever                              ;

The name of a disease is cold          80   ;

The name of a disease is pneumonia    -50   ;

! The name of a disease is pneumonia   50   ;
```

In the examples of the four facts shown in Table 1, the first fact is "There is a fever" and represents a pattern of fact (as will be described later) with ";" showing the end of the fact. If no numeral exist in front of ";", the accuracy of the fact is 100 and such a fact is treated as a decisive fact. The second fact indicate that the accuracy of the fact, "The illness is a cold", is 80. The third fact indicates that the accuracy of the fact, "The illness is pneumonia", is -50. If the accuracy is shown by a negative numeral, it means that the fact is denied. The fourth fact is a negative form of the third fact. The symbol "!" placed at the head of the sentence indicates a negation. The third and fourth facts are totally equally treated.

A type of existence relative to the fact is void. The existence/void is attached to each condition within the condition section of the rules, as will be described, and is used for the determination of whether or not such conditions are established.

An example of the sentence construction of the rule in the knowledge file is shown in Table 2.

## Table 2

```
<Diagnosis of Cold>
If
    there is a fever
    there is a quivering
    — The name of a disease is a cold
then
    (display " The illness appears to be a cold") 100
    (make The illness is a cold)    80    ;
```

The rule consists of the rule designation "<Diagnosis of Cold>", the priority "100", the condition section "If ··· ", the conclusion section "then", and the accuracy "80", and the end of one rule is represented by ";". The priority of this rule is 100. The priority in the illustrated embodiment can take any value within the range from -32768 to 32767 and will take zero (0) if the description is omitted. Accordingly, the rule shown in Table 2 above gives a priority to the other rule in which the priority has been omitted. The accuracy may be omitted and, if omitted, will be regarded 100 as described above. In the example shown in Table 2, the accuracy is 100. The accuracy of the rule is 80 reflects the degree of belief that the newly added fact for the case when one of the accuracies of the facts matching with each condition in the condition section is 80 and the accuracy is stored in the working memory 5.

If the lowest accuracy is not 100, a proportional distribution is made to render the accuracy 80 of the rule to be 100. The symbol "—" used in the third condition in the above rule indicates that, if the fact "The illness is a cold" is not stored in the working memory 5, this condition is true.

The meaning of the above described rule is that, if the facts of "there is a fever" and "there is a quivering" are in the working memory 5 and if the fact of "the name of the disease is a cold" is not in the working memory 5, the display "The name of the disease appears to be a cold." is made. Also, the fact of "The illness is a cold." is added to the working memory 5.

(B) Storing Method

The fact and rule of the above described sentence construction are stored in the working memory 5 and the rule. storage 11 or 12, respectively, by the input processing performed by the input processing unit 6 shown in Fig. 1.

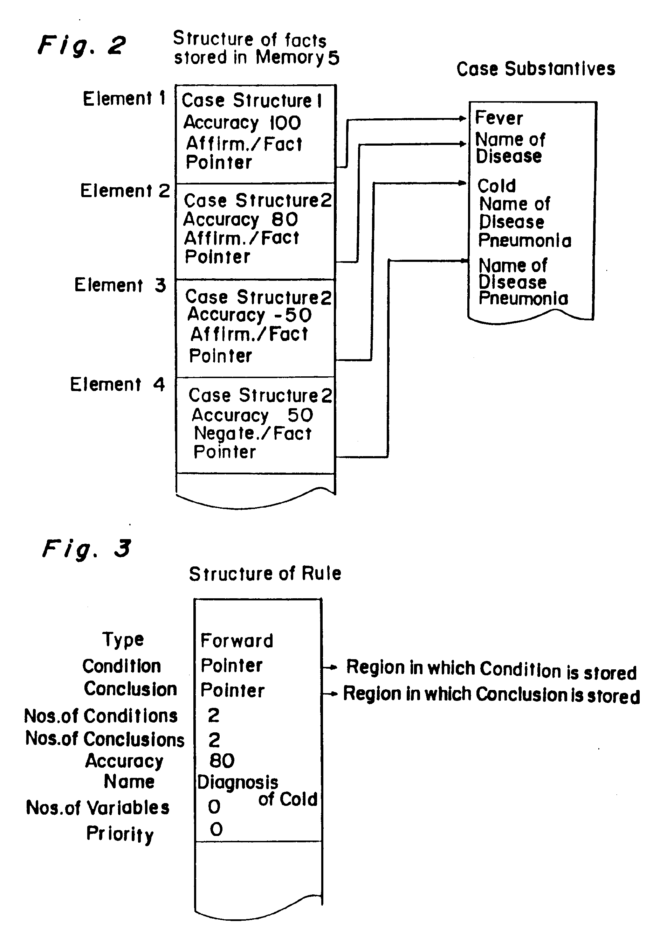

A method of storing the fact in the working memory 5 will first be described. By way of example, the four facts shown in Table 1 are stored in the form of such structures as shown in Fig. 2. In the interrogating device 1 of the illustrated embodiment, in order to maximize the efficiency of the memory, there is provided a region in which a case structure of the fact is separately stored. In an entry in the case structure of the working memory 5, an arrangement of numbers for case structures are allocated corresponding to the regions in which the actual case structures are stored. Moreover, accuracies, flags and pointers are allocated to the working memory 5.

Referring to Fig. 2, the case structure 1 in the first entry represents a structure of the fact "There is —", while the case structure 2 represents a structure of the fact "It is —". In the actual working memory 5, the numbers of arrangement of the corresponding case structures, as described above, are stored. The flag in the third entry is a flag used to express whether each element in the working memory 5 is affirmative or whether each element in the working memory 5 is negative. The arrangement (or address) of the number for the case structure is entered in the pointer in the last entry.

Hereinafter, a method of storing the rule in the rule storage 11 or 12 will be described. By way of example, the rules shown in Table 2 are stored in the rule storages 11 and 12 in the structure forms as shown in Fig. 3.

In the illustrated embodiment, as is the case with the fact, in order to maximize the efficiency of the memory, the condition section and the conclusion section of the rules are stored in respective regions. The condition section and the conclusion section store respective pointers indicative of the position of the condition section and that of the conclusion section corresponding to the above described regions. Only a structure which constitutes the heart of the rule is illustrated here.

Although in Fig. 1 the rule storages 11 and 12 for the forward and backward inferences, respectively, are shown separately, a common region is occupied by the forward and backward inference rules. Depending on the type shown in the second entry in Fig. 3, the forward inference rule and the backward inference rule are separated.

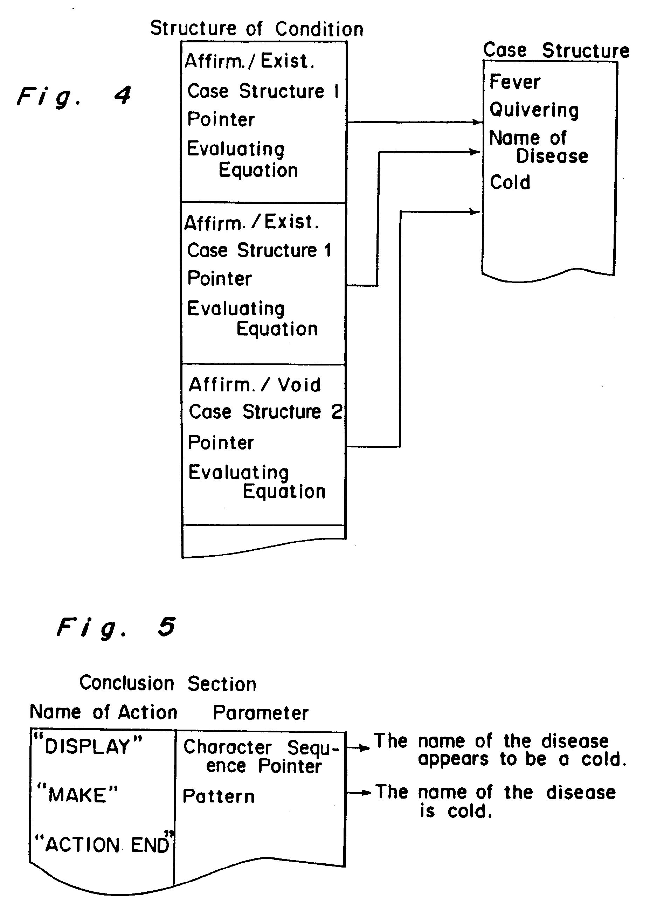

A method of storing conditions of the rule will now be discussed. The storage structure of the conditions is shown in Fig. 4. This is a structure in a region pointed out by the condition in the structure of the rule shown in Fig. 3. The structure of the conditions is, as is the case with the structure of the facts, stored with case structures separated in respective regions. The first entry of the structure for the conditions represents the type of condition. The above type is weighed by a bit-to-bit manner in the memory. "Negation" ("Negat." in Fig. 4) is the same as the negation of the fact as described above. "Existence" ("Exist." in Fig. 4) indicates the establishment of a condition when the fact which matches with such condition exists in the working memory 5. On the other hand, "Void" indicates that a condition is established if the fact that matches with such condition does not exist in the working memory 5. The respective entries for the case structure and the pointer are the same as described above in connection with those for the fact. The entry of the evaluating equation is used in the case where the condition makes use of a variable and there is some limitation to the variable. The content actually stored in the entry of the evaluating equation is a pointer towards a structure of the equation.

Also, a method of storing the conclusion section of the rule will now be described. The rule structure shown in Fig. 3, is a structure of a region directed to a pointer of the conclusion section. As shown in Fig. 5, the action in the conclusion section consists of the name of the action and a parameter. The action in the example shown in Table 2 is "DISPLAY" and "MAKE" of the fact. In case of the displaying, since a processing is done with the display of the parameters and the display of the character sequence separated, a value of "DISPLAY" is entered in the case of the display of the character sequence. In the case of the addition of the fact, a value of "MAKE" is entered. Finally, "ACTION END" is entered.

"DISPLAY", "MAKE", and "ACTION END" are in fact integer values and, in the illustrated embodiment, they are expressed by the respective character sequences. In practice, however, 1, 2 and 0 are respectively allocated to "DISPLAY", "MAKE" and "ACTION END".

(C) Execution of Forward Inference

The forward inference is executed in the following procedures.

(1) Comparison is made between each condition in the condition section of the rules and the fact in the working memory 5 so that the rule can be selected in which all of the condition are satisfied. At this time, if there is a plurality of sets of facts in the working memory 5 with respect to a certain rule which satisfy the condition section, they are distinguished. The rule which has been selected as a result of the establishment of the conditions is hereinafter referred as an executable rule. A set of this executable rule and the fact corresponding thereto is called a conflict set.

(2) Only one is selected out from the conflict set determined during the procedure (1) above. The selection of only one from the conflict set is called a conflict resolution, and the manner of selecting is called a strategy of the conflict resolution, or simply a strategy. Where there is no conflict set, the inference is terminated.

(3) The conclusion section of the rule which has been selected as a result of the conflict resolution is executed. This is referred to as a firing of the rule, or simply a firing. After the firing, the procedure (1) above is resumed.

Each time the rule is executed, comparison is made between the next succeeding rule and the working memory 5. However, a combination of the rule, which has previously been fired, and the fact in the working memory 5 will no longer be added to the conflict set.

(C-1) Matching

With respect to each condition of the rule and the fact in the working memory 5, comparisons of the pattern, the accuracy and the affirmative/negative are carried out in the following manner.

(i) The pattern is checked as to whether it matches. The pattern refers to a combination of a case construction, such as "There is ···", and a value "fever" in the sentence "There is a fever". A variable may be used as a condition and, in such case, a check is made with the use of a value, confined by the variable, to determine if the pattern matches with each other.

(ii) By combining the accuracy and the affirmative/negative, the matching is determined according to Table 3 below.

## Table 3

| Matching | Condition | Elements in the Working Memory | |
|---|---|---|---|
| Success | Affirmative | Affirmative | 20 < = Accuracy |
| Failure | Affirmative | Affirmative | Accuracy < 20 |
| Success | Affirmative | Negative | Accuracy < = -20 |
| Failure | Affirmative | Negative | -20 < Accuracy |
| Success | Negative | Affirmative | Accuracy < = -20 |
| Failure | Negative | Affirmative | -20 < Accuracy |
| Success | Negative | Negative | 20 < = Accuracy |
| Failure | Negative | Negative | Accuracy < 20 |

(iii) If the condition is "Void", the conditions for truth and false are reversed.

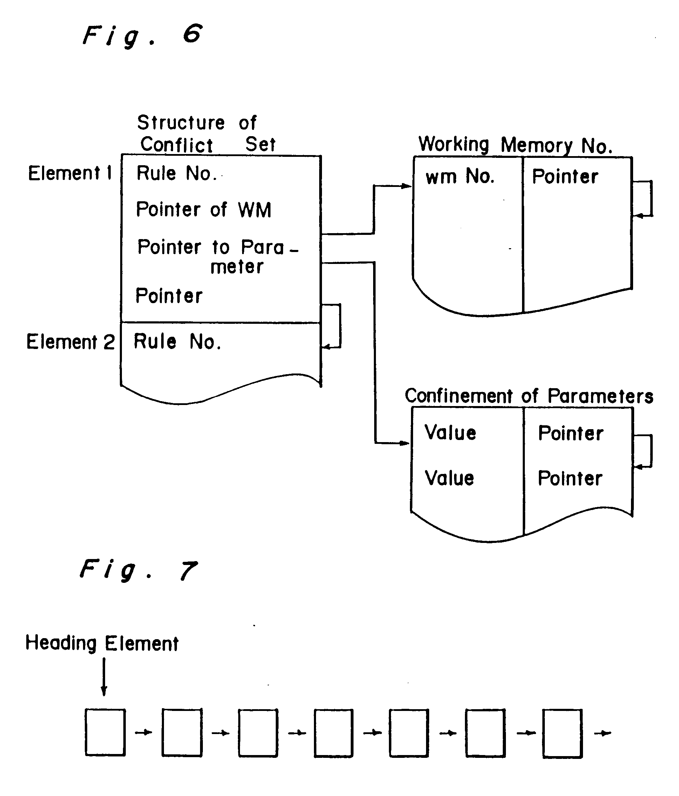

In this way, when all of the conditions in the rule are established, sets of the established rules and the facts in the working memory 5 are registered in the conflict set storage 13 in the forward inference section 3 shown in Fig. 1. The structure of storage of the conflict sets is shown in Fig. 6. The structure of elements of the conflict set consists of the rule number, the number of the elements of the working memory 5 which have matched, the confinement of the variable during the matching and the pointer which arranges the structure according to the strategy. This storage structure for each rule which has been matched and the fact is prepared in the working memory 5.

(C-2) conflict Resolution

The elements of the conflict set prepared in (C-1) are arranged according to the strategy at that time. In the illustrated embodiment, the arrangement is not carried out after all of the elements have been determined. However, each time the element is determined, the elements so determined are successively inserted in a list of the elements. The elements are chained together as shown in Fig. 7 by respective pointers shown in Fig. 6.

Where a new element is made, the new element is inserted in the chain of the elements in the following procedures.

(a) The heading element of the conflict set is rendered subject to a comparison.

(b) Comparison is made between the new element and the heading element according to the current strategy.

(c) If as a result thereof priority is given to the new element, the new element is inserted in front of the element which is subjected to a comparison, followed by the termination.

(e) If priority is not given to the new element, the new element is again compared with the next succeeding element. If there is no element with which it is to be compared, the new element is inserted subsequent to the last element, followed by the termination.

(f) Return to (b).

In the illustrated embodiment, as the strategy used in the procedure (b) above, "LEX", "MEA" and "cf" are available.

(C-3) Execution of Rule

At the time the conflict resolution terminates at (C-2), one of the elements of the conflict set is selected and the conclusion section of the rule thereof is executed according to the rule number thereof.

The preparation and the addition of the fact of the negation to the working memory 5 according to the present invention will now be described. Table 4, below, illustrates the construction of a sentence for the forward inference rule used to add the fact of the negation. An action for adding the fact of the negation to the working memory 5 uses "make" in a manner similar to the addition of the fact of the affirmative to the working memory 5 shown in Table 2. Then, "!" is affixed to the heading of a pattern. In other words, in order to make a negation of "The illness is a cold", the symbol "!" is placed in front of the pattern "The illness is a cold." as shown in Table 4.

The structure when the rules of Table 4 are stored in the rule storage 11 is as follows.

## Table 4

```
<Diagnosis of Cold>

If

    there is a fever

    there is a quivering

    — The name of a disease is a cold

then,

    (display "The illness appears to be a cold" )

    (make! The illness is a cold)    80    ;
```

In other words, it is recommended to insert "!" at the head of the structure of the pattern indicated by a parameter "Pattern" for the action "MAKE" as shown in Fig. 5 and then render it to show "! The illness is a cold".

In this way, the fact of the negation prepared by the forward inference can be used during the backward inference.

(D) Backward Inference

The case for the backward inference will now be described. The backward inference is carried out by conducting a search of a tree structure for a given rule to determine the establishment/non-establishment of the condition, and proceeds to the next branch if the condition has been established. Depending on the necessity (for example, depending on whether or not the branch to be searched is available), an interrogation is carried out. The fact obtained as a result of the interrogation and the fact obtained in the conclusion unit of the backward inference rules are added as elements of the working memory 5 and the search is carried out until the final goal is satisfied. The result of the interrogation and both of the accuracy in the conclusion unit of the backward inference rules and the fact to which a flag of negation/affirmation is attached are written in the working memory 5. The criteria with which the establishment/non-establishment of the condition are determined are those shown in Table 3 as is the case with the forward inference.

According to the prior art backward inference, where there is no fact (the element of the working memory 5) which matches with a certain condition, the interrogation is performed in the manner as hereinabove described. Therefore, when the knowledge is formed into a rule, if a condition of the negation (there is not ···) for establishing the condition "If there is not in the working memory" used during the forward inference is written in the rule for the backward inference, there is no need to carry out the interrogation in the absence of a matching fact during the backward inference.

Table 5 below illustrates the sentence construction of the backward inference rule in which the condition of the negation of "If there is not in the working memory" is described in the condition unit of the backward inference rule.

## Table 5

```
     <Backward Diagnosis of Cold>
If
   there is a fever
   there is a quivering
   (priority Diagnosis of Cold 20)
   ——  The name of the disease is cold
   (display "The name of the disease appears to be cold")
then,
   the name of the disease  is cold  80   ;
```

According to this rule, an action "priority" is executed if the first and second conditions are established. If there is no fact of "The name of the disease is cold" in the working memory 5 under the third condition, "The name of the disease appears to be cold" is displayed and the conclusion of "The name of the disease is cold" establishes an accuracy of 80.

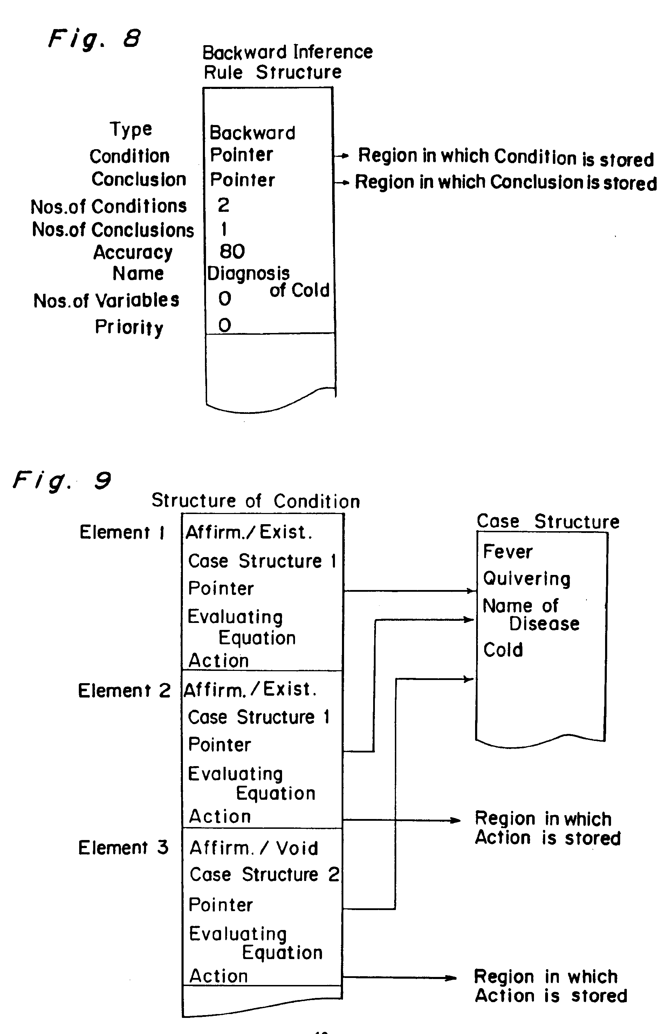

The storage structures of the rules of Table 5 and the conditions for these rules are shown in Figs. 8 and 9, respectively. In Fig. 9, the uppermost entry of the third element indicates "Affirmative/Void (Affirm./Void)" and the condition corresponding to the element 3 will be true when no fact is in the working memory 5 (in terms of the case construction 2, the values thereof are "The name of the disease" and "Cold"). Also, in respective entries for the actions in the second and third elements, pointers directed to the actions ("priority" and "display" in Table 5) to be executed when the second and third conditions are accommodated.

Thus, when the interrogating device of the present invention is used, the following is possible.

(A) If the fact of the negation "··· not ···" prepared in the conclusion unit of the rule for the forward inference is added to the working memory 5, the fact of the negation is added to the working memory 5 and can be used in matching the condition of the negation "··· not ···" that is used in the backward inference. For example, where the condition of the negation and the fact of the negation are matched with each other in the backward inference, if the search for the branch of the negation is interrupted, unnecessary searches are not carried out for giving a conclusion of the negation after the condition of the negation and the condition of the fact have been matched with each other.

(B) Where the deletion of the fact of the working memory 5 is carried out in the forward inference, an interrogation is not necessary and the inference can be continued when the condition of "There is not ···" is added to the condition of the rules in the backward inference.

Accordingly, an efficient inference is possible.

From the foregoing, it is clear that, since according to the present invention a command necessary for instructing the preparation of the facts of the negation according to the need is added to a conclusion unit of the forward inference rules that are stored in the rule memory. Also, a command for rendering a condition to be true in the event that there is no fact corresponding to the working memory is added to a condition unit of the backward inference rules stored in the rule memory. Whereby, the fact of the negation prepared by the forward inference can be used in the backward inference. In addition, the backward inference can be accomplished even though the working memory does not contain any corresponding fact, with the fact of the negation prepared in the forward inference being used in the backward inference. Accordingly, in the backward inference, unnecessary searches for obtaining the conclusion of the negation do not result, and an efficient inference is thereby enabled.

Also, since the condition which will become true, if there is no fact corresponding to the working memory is added to the condition unit of the backward inference rules depending on the necessity, the backward inference is possible even without the corresponding facts existing in the working memory. Accordingly, an interrogation is unnecessary which is required when the fact matching with a certain condition is available, and an efficient inference is enabled to be carried out.

## Claims

1. An interrogating device comprising a rule memory (11) for storing forward inference rules that are used in a forward inference control system and backward inference rules that are used in a backward inference control system, a working memory (5) for storing facts, a forward inference control section (3) that adds or deletes a fact relative to the working memory according to the forward inference rules, and a backward inference control section (4) that conducts a search according to a tree structure of search rules, characterized in that a command necessary to instruct the preparation of the facts of the negation is added to a conclusion unit of the forward inference rules stored in the rule memory and a condition which renders it to be true, when there is no fact corresponding to the working memory, is added to a condition unit of the backward inference rules stored in the rule memory, whereby the fact of the negation previously prepared by the forward inference can be used in the backward inference and the backward inference can be accomplished even though the working memory does not contain a corresponding fact.

2. A method for performing an inference analysis by an interrogating device comprising the steps of storing forward inference rules in a rule memory (11) that are used in a forward inference control and backward inference rules in a rule memory (11) that are used in a backward inference control, storing facts in a working memory (5), adding or deleting a fact relative to the working memory according to the forward inference rules in said forward inference under control of a forward inference control section (3) and conducting a search according to a tree structure of search rules in said backward inference under control of a backward inference control section (4),
characterized in that a command necessary to instruct the preparation of the facts of the negation is added to a conclusion unit of the forward inference rules and a condition which renders it to be true, when there is no fact corresponding to the working memory, is added to a condition unit of the backward inference rules, whereby the fact of the negation previously prepared by the forward inference can be used in the backward inference and, the backward inference can be accomplished even though the working memory does not contain a corresponding fact.

## Patentansprüche

1. Abfragevorrichtung mit einem Regelspeicher (11) zum Speichern von Vorwärts-Verknüpfungsregeln, die in einem Vorwärts-Verknüpfungs-Steuersystem verwendet werden, und von Rückwärts-Verknüpfungs-Regeln, die in einem Rückwärts-Verknüpfungs-Steuersystem verwendet werden, einem Arbeitsspeicher (5) zum Speichern von Fakten, einem Vorwärts-Verknüpfungs-Steuerabschnitt (3), der einen Fakt relativ zum Arbeitsspeicher gemäß den Vorwärts-Verknüpfungs-Regeln addiert oder löscht, und einem Rückwärts-Verknüpfungs-Steuerabschnitt (4), der eine Suche gemäß einer Baumstruktur von Suchregeln durchführt,
dadurch gekennzeichnet, daß ein Befehl, der zum Anweisen der Vorbereitung der Fakten der Negierung erforderlich ist, einer Schlußfolgerungseinheit der Vorwärts-Verknüpfungsregel, die im Regelspeicher gespeichert sind, und eine Bedingung, die ihn wahr macht, wenn kein Fakt entsprechend dem Arbeitsspeicher vorhanden ist, einer Bedingungseinheit der Rückwärts-Verknüpfungsregeln, die im Regelspeicher gespeichert sind, addiert werden, wobei der Fakt der Negierung, der vorher in der Vorwärtsverknüpfung vorbereitet wurde, in der Rückwärtsverknüpfung verwendet werden kann und die Rückwärtsverknüpfung durchgeführt werden kann, selbst wenn der Arbeitsspeicher einen entsprechenden Fakt nicht enthält.

2. Verfahren zur Durchführung einer Verknüpfungsanalyse durch eine Abfragevorrichtung mit den Schritten des Speicherns von Vorwärtsverknüpfungsregeln in einem Regelspeicher (11), die bei einer Vorwärts-Verknüpfungssteuerung verwendet werden, und von Rückwärtsverknüpfungsregeln in einem Regelspeicher (11), die bei einer Rückwärtsverknüpfungs-Steuerung verwendet werden, Speichern von Fakten in einem Arbeitsspeicher (5), Addition oder Löschen eines Fakts relativ zum Arbeitsspeicher entsprechend den Vorwärtsverknüpfungsregeln in der Vorwärtsverknüpfung unter Steuerung durch einen Vorwärts-Verknüpfungsabschnitt (3) und Durchführung einer Suche in einer Baumstruktur von Suchregeln in der Rückwärtsverknüpfung unter Steuerung durch eine Rückwärtsverknüpfungs-Steuerabschnitt (4), dadurch **gekennzeichnet**, daß ein Befehl, der zum Anweisen der Vorbereitung der Fakten der Negierung erforderlich ist, einer Schlußfolgerungseinheit der Vorwärtsverknüpfungsregeln addiert wird und eine Bedingung, die ihn wahr macht, wenn kein Fakt entsprechend dem Arbeitsspeicher vorhanden ist, einer Bedingungseinheit der Rückwärtsverknüpfungsregeln addiert wird, wobei der Fakt der Negierung, der vorher durch die Vorwärtsverknüpfung vorbereitet wurde, in der Rückwärtsverknüpfung verwendet werden kann, und wobei die Rückwärtsverknüpfung selbst dann durchgeführt werden kann, wenn der Arbeitsspeicher keinen entsprechenden Fakt enthält.

## Revendications

1. Dispositif d'interrogation comportant une mémoire de règles (11) pour emmagasiner des règles d'inférence aval qui sont utilisées dans un système de contrôle d'inférences aval et des règles d'inférence amont qui sont utilisées dans un système de contrôle d'inférences amont, une mémoire de travail (5) pour emmagasiner des faits, une section d'inférences aval (3) qui ajoute ou supprime un fait relatif à la mémoire de travail conformément aux règles d'inférences aval, et une section de contrôle d'inférences amont (4) qui effectue une recherche selon une structure arborescente de règles de recherche, caractérisé en ce qu'une commande requise pour ordonner la préparation des faits de la négation est ajoutée à une unité de conclusions des règles d'inférence aval emmagasinées dans la mémoire de règles et une condition qui la rend vraie, lorsqu'il n'y a pas de fait correspondant à la mémoire de travail, est ajoutée à une unité de conditions des règles d'inférence amont emmagasinées dans la mémoire de règles, si bien que le fait de la négation préparé précédemment par l'inférence aval peut être utilisé dans l'inférence amont, et l'inférence amont peut être accomplie même si la mémoire de travail ne contient pas un fait correspondant.

2. Procédé d'exécution d'une analyse d'inférence par un dispositif d'interrogation comportant les étapes consistant à emmagasiner dans une mémoire de règles (11) des règles d'inférence aval qui sont utilisées dans un contrôle d'inférence aval et à emmagasiner dans une mémoire de règles (11) des règles d'inférence amont qui sont utilisées dans un contrôle d'inférence amont, à emmagasiner des faits dans une mémoire de travail (5), à ajouter ou à supprimer un fait relatif à la mémoire de travail conformément aux règles d'inférence aval dans ladite inférence aval sous le contrôle d'une section de contrôle d'inférences aval (3) et à effectuer une recherche selon une structure arborescente de règles de recherche dans ladite inférence amont sous le contrôle d'une section de contrôle d'inférences amont (4), caractérisé en ce qu'une commande requise pour ordonner la préparation des faits de la négation est ajoutée à une unité de conclusions des règles d'inférence aval et une condition qui la rend vraie, lorsqu'il n'y pas de fait correspondant à la mémoire de travail, est ajoutée à une unité de conditions des règles d'inférence amont, si bien que le fait de la négation préparé précédemment par l'inférence aval peut être utilisé dans l'inférence amont et l'inférence amont peut être accomplie même si la mémoire de travail ne contient pas un fait correspondant.

## Fig. 1

## Fig. 2 Structure of facts stored in Memory 5

Case Substantives

| | |
|---|---|
| Element 1 | Case Structure I<br>Accuracy 100<br>Affirm./Fact<br>Pointer |
| Element 2 | Case Structure 2<br>Accuracy 80<br>Affirm./Fact<br>Pointer |
| Element 3 | Case Structure 2<br>Accuracy -50<br>Affirm./Fact<br>Pointer |
| Element 4 | Case Structure 2<br>Accuracy 50<br>Negate./Fact<br>Pointer |

Fever
Name of Disease

Cold
Name of Disease
Pneumonia

Name of Disease
Pneumonia

## Fig. 3

### Structure of Rule

| | |
|---|---|
| Type | Forward |
| Condition | Pointer |
| Conclusion | Pointer |
| Nos. of Conditions | 2 |
| Nos. of Conclusions | 2 |
| Accuracy | 80 |
| Name | Diagnosis of Cold |
| Nos. of Variables | 0 |
| Priority | 0 |

→ Region in which Condition is stored
→ Region in which Conclusion is stored

*Fig. 4*

Structure of Condition

| Affirm. / Exist. |
| --- |
| Case Structure I |
| Pointer |
| Evaluating Equation |

| Affirm. / Exist. |
| --- |
| Case Structure 1 |
| Pointer |
| Evaluating Equation |

| Affirm. / Void |
| --- |
| Case Structure 2 |
| Pointer |
| Evaluating Equation |

Case Structure

| Fever |
| --- |
| Quivering |
| Name of Disease |
| Cold |

*Fig. 5*

Conclusion Section

| Name of Action | Parameter | |
| --- | --- | --- |
| "DISPLAY" | Character Sequence Pointer | → The name of the disease appears to be a cold. |
| "MAKE" | Pattern | → The name of the disease is cold. |
| "ACTION END" | | |

*Fig. 6*

**Structure of Conflict Set**

Element 1
- Rule No.
- Pointer of WM
- Pointer to Para- meter
- Pointer

Element 2
- Rule No.

**Working Memory No.**

| wm No. | Pointer |
|--------|---------|

**Confinement of Parameters**

| Value | Pointer |
|-------|---------|
| Value | Pointer |

*Fig. 7*

Heading Element

## Fig. 8

Backward Inference
Rule Structure

| | |
|---|---|
| Type | Backward |
| Condition | Pointer | → Region in which Condition is stored |
| Conclusion | Pointer | → Region in which Conclusion is stored |
| Nos.of Conditions | 2 |
| Nos.of Conclusions | 1 |
| Accuracy | 80 |
| Name | Diagnosis of Cold |
| Nos.of Variables | O |
| Priority | O |

## Fig. 9

Structure of Condition

Case Structure

Element 1
Affirm./Exist.
Case Structure 1
Pointer
Evaluating Equation
Action

Fever
Quivering
Name of Disease
Cold

Element 2
Affirm./Exist.
Case Structure 1
Pointer
Evaluating Equation
Action

→ Region in which Action is stored

Element 3
Affirm./Void
Case Structure 2
Pointer
Evaluating Equation
Action

→ Region in which Action is stored

16